Europäisches Patentamt

European Patent Office

Office européen des brevets

(19)

(11) Numéro de publication : **0 380 891 B1**

(12) ## FASCICULE DE BREVET EUROPEEN

(45) Date de publication du fascicule du brevet :
**11.03.92 Bulletin 92/11**

(51) Int. Cl.$^5$ : **B60R 21/02**

(21) Numéro de dépôt : **89403448.7**

(22) Date de dépôt : **12.12.89**

(54) **Dispositif de cloisonnement pour la partie arrière de l'habitacle d'un véhicule.**

(30) Priorité : **31.01.89 FR 8901195**

(43) Date de publication de la demande :
**08.08.90 Bulletin 90/32**

(45) Mention de la délivrance du brevet :
**11.03.92 Bulletin 92/11**

(84) Etats contractants désignés :
**DE ES GB IT**

(56) Documents cités :
**DE-C- 3 405 096**
**FR-A- 2 353 417**
**FR-A- 2 452 571**
**FR-A- 2 564 791**
**FR-A- 2 591 970**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Enguehard, Philippe**
**1, rue du Docteur Vuillième**
**92190 Meudon (FR)**

(74) Mandataire : **Kohn, Philippe et al**
**c/o CABINET LAVOIX 2, place d'Estienne**
**d'Orves**
**F-75441 Paris Cédex 09 (FR)**

EP 0 380 891 B1

# Description

La présente invention concerne un dispositif de cloisonnement pour véhicule muni d'un volet s'articulant à l'arrière d'un pavillon et situé au-dessus d'un compartiment à bagages, une tablette s'étendant au-dessus de ce compartiment, et du type comprenant une cloison transparente disposée à l'intérieur du véhicule au voisinage du volet.

Un tel dispositif de cloisonnement transparent pour véhicule à hayon est décrit et représenté dans le document FR-A-2.591.970. Ce dispositif permet d'aménager dans un véhicule muni d'un volet arrière un dispositif simple de cloisonnement qui isole l'habitacle quand le volet est ouvert et qui permet l'usage normal de la tablette arrière et l'éventuel chargement d'objets de grandes dimensions qui nécessite le retrait de la tablette et le basculement total, ou partiel, du siège arrière.

On constate toutefois, comme cela est indiqué dans ce document, qu'il est alors nécessaire de retirer complètement la cloison qui est prévue amovible à cet effet.

L'invention a pour but de proposer un dispositif du type mentionné plus haut dans lequel il n'est pas nécessaire de déposer la cloison transparente lorsque l'utilisateur désire charger des objets de grandes dimensions et dans lequel la manipulation de la cloison soit particulièrement aisée.

Dans ce but l'invention propose un dispositif de cloisonnement caractérisé en ce que la cloison est montée pivotante, autour d'un axe agencé au voisinage de son bord supérieur et parallèle à l'axe d'articulation du volet, entre une position fermée dans laquelle son bord inférieur est agencé à proximité d'une portion de la tablette et une position ouverte dans laquelle la cloison est maintenue par des moyens d'accrochage temporaire de la cloison au volet.

Selon d'autres caractéristiques de l'invention :
– les moyens d'accrochage temporaire comportent un cordon dont une première extrémité est reliée à la cloison et dont l'autre extrémité est reliée à une poignée comportant un dispositif d'accrochage sur le volet ;
– la poignée est une poignée amovible fixée sur la cloison lorsque cette dernière est dans la position fermée;
– le bord inférieur de la cloison est équipé d'un joint d'étanchéité apte à reposer sur la tablette lorsque la cloison est dans sa position fermée et qui comporte une portion creuse de forme sensiblement tubulaire définissant un logement dans lequel est reçue la poignée, et le cordon est logé entièrement à l'intérieur de la portion creuse du joint lorsque la poignée est dans son logement ;
– le cordon est un cordon élastique ;
– le dispositif d'accrochage de la poignée sur le volet est du type comportant un bouton d'accrochage et une échancrure d'accrochage de la poignée sur le bouton ;
– le bord supérieur de la cloison est équipé d'un joint d'étanchéité, et la cloison est montée pivotante au moyen d'au moins un charnon fixe et un charnon mobile, des moyens d'étanchéité étant prévus pour assurer l'étanchéité du bord supérieur dans la zone des charnons lorsque la cloison est dans sa position fermée;
– le charnon fixe comporte une première partie plane dont une extrémité reçoit l'axe de pivotement et qui est sensiblement parallèle au plan de la cloison lorsque cette dernière est dans sa position fermée et une deuxième partie plane qui prolonge l'autre extrémité de la première partie en formant un angle avec elle et qui est reliée à la caisse du véhicule, les moyens d'étanchéité étant constitués par un joint monté sur le bord supérieur de la cloison et qui prend appui sur la deuxième partie du charnon fixe en vis à vis lorsque la cloison est dans sa position fermée; et
– la deuxième partie du charnon fixe est reliée à la caisse du véhicule par une troisième partie sensiblement parallèle à la première partie.

D'autres caractéristiques et avantages de l'invention apparaîtront à la lecture de la description détaillée qui va suivre pour la compréhension de laquelle on se reportera aux dessins annexés dans lesquels :
– La figure 1 est une vue simplifiée en élévation et en coupe par un plan longitudinal de la partie arrière d'un véhicule équipé du dispositif de cloisonnement selon l'invention, le volet arrière étant en position fermée et la cloison dans sa première position ;
– la figure 2 est une vue similaire à celle de la figure 1, le volet arrière étant représenté en position ouverte et la cloison transparente dans une position intermédiaire ;
– la figure 3 est une vue en perspective éclatée à plus grande échelle de la cloison transparente et de ses divers accessoires qui permettent d'en assurer l'articulation, l'étanchéité et la manipulation ;
– la figure 4 est une vue simplifiée en perspective de la cloison arrière équipée de son joint d'étanchéité inférieur, la poignée étant sortie de son logement ;
– la figure 5 est une vue en coupe partielle selon la ligne 5-5 du joint d'étanchéité inférieur représenté à la figure 4 ;
– la figure 6 est un schéma qui représente la cloison transparente en position ouverte et la poignée en position accrochée sur la traverse ; et
– la figure 7 est une vue en coupe partielle et à échelle agrandie d'une partie de la traverse supérieure de la caisse du véhicule dans la zone d'une des deux charnières d'articulation de la cloison transparente.

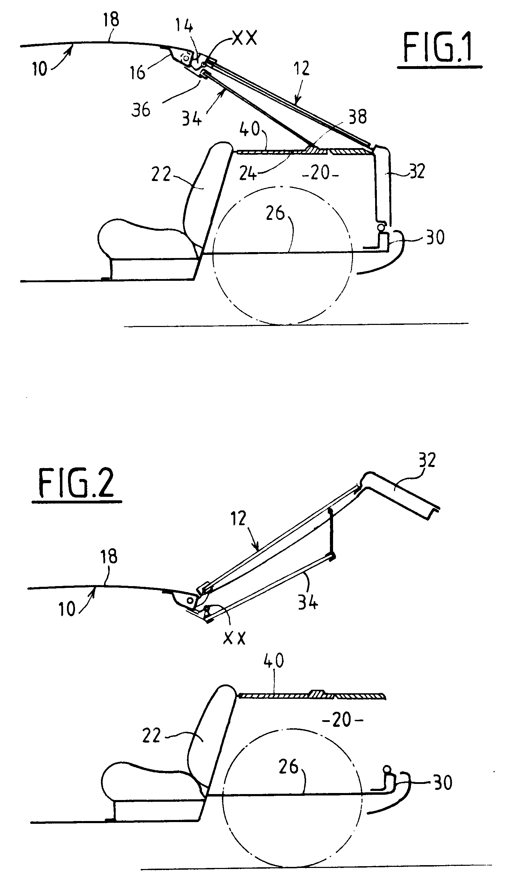

La partie arrière 10 du véhicule représenté aux figures 1 et 2 est équipée d'un hayon arrière 12 dont le bord supérieur 14 est articulé sur la traverse arrière 16 du pavillon 18 du véhicule.

Le hayon 12 s'étend au-dessus du compartiment à bagages 20 du véhicule qui est délimité par le dossier 22 du siège arrière, par une tablette 24 s'étendant vers l'arrière à partir du haut du dossier 22 parallèlement au plancher 26 et sensiblement jusqu'au droit du bord arrière 30 de celui-ci.

Le compartiment 20 est enfin fermé à l'arrière par la partie inférieure 32 du hayon 12.

Conformément à l'invention, il est prévu une cloison transparente 34 qui est montée pivotante au voisinage de son bord supérieur 36 autour d'un axe de pivotement X-X parallèle à l'axe de pivotement du hayon 12.

Dans sa première position fermée représentée à la figure 1, le bord inférieur 38 de la cloison 34 prend appui sur la face supérieure 40 de la tablette 24.

On décrira maintenant en détail la structure de la cloison arrière 34.

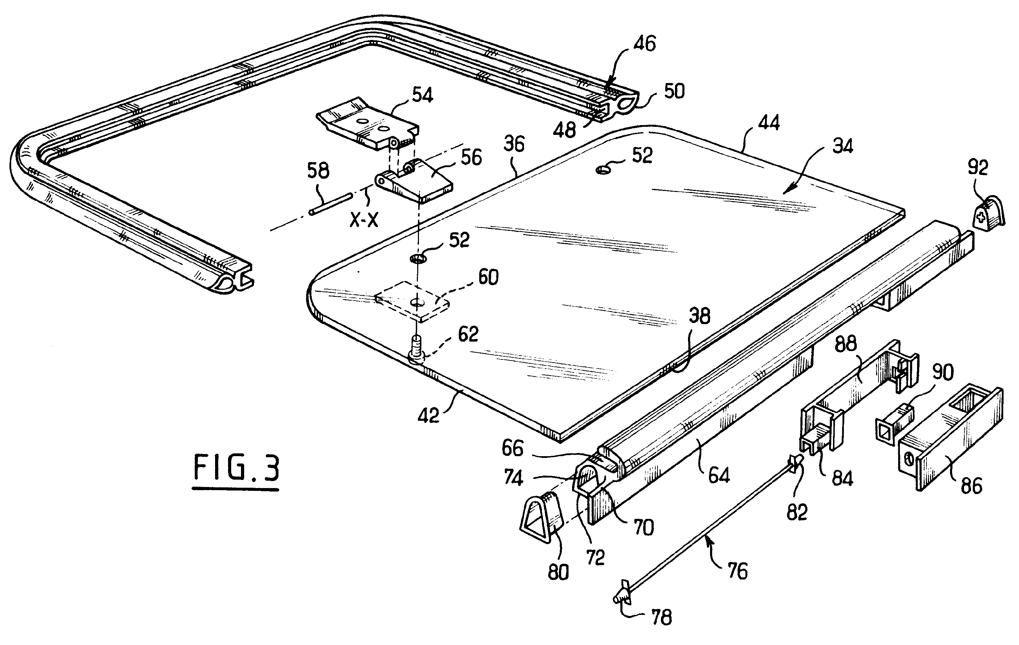

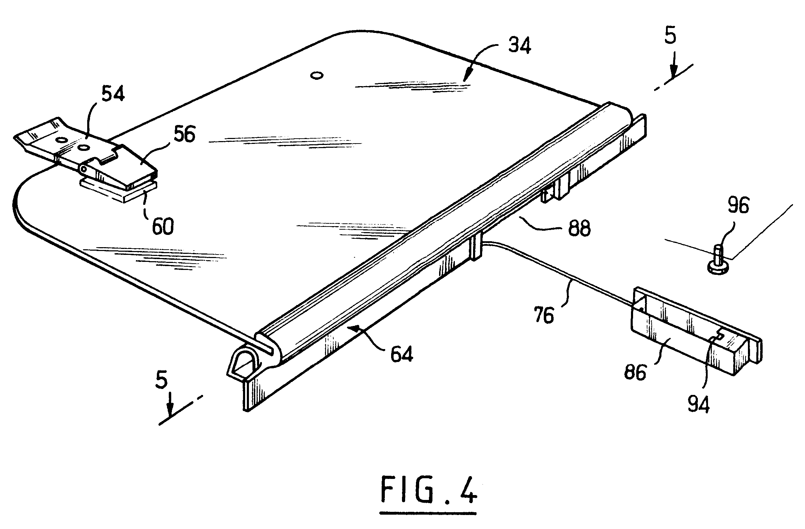

Comme on peut le constater notamment aux figures 3 et 4, la cloison transparente 34 est une vitre de forme sensiblement rectangulaire dont le bord supérieur 36 et les deux bords latéraux parallèles 42 et 44 sont équipés d'un joint d'étanchéité périphérique 46 comportant une rainure 48 de montage sur la vitre et une lèvre d'étanchéité de section creuse 50.

L'articulation et le pivotement de la vitre 34 sur la traverse 16 sont obtenus au moyen de deux charnières fixées dans des trous 52 prévus au voisinage du bord supérieur 36 de la vitre.

La charnière illustrée à la figure 3 comprend un charnon fixe 54 et un charnon mobile 56 reliés entre eux par un axe de pivotement 58.

La fixation du charnon mobile 56 est assurée au moyen d'une contre-plaque 60 et d'une vis 62.

Le bord inférieur 38 de la vitre 34 est équipé d'un joint inférieur d'étanchéité 64.

Le joint 64 comporte une rainure 66 permettant son montage par emboitement sur le bord inférieur 38 et un corps tubulaire creux 70.

Le corps tubulaire creux 70 présente une section interne sensiblement rectangulaire dont le côté tourné vers la rainure 66 est arrondi.

Le profil externe du corps tubulaire 70 est également sensiblement rectangulaire et sa face inférieure 72 est prévue, lorsque la cloison est dans sa première position fermée, pour reposer sur la face supérieure 40 de la tablette.

Le corps tubulaire 70 du joint d'étanchéité 64 définit un espace interne creux 74 dans lequel sont reçus divers éléments.

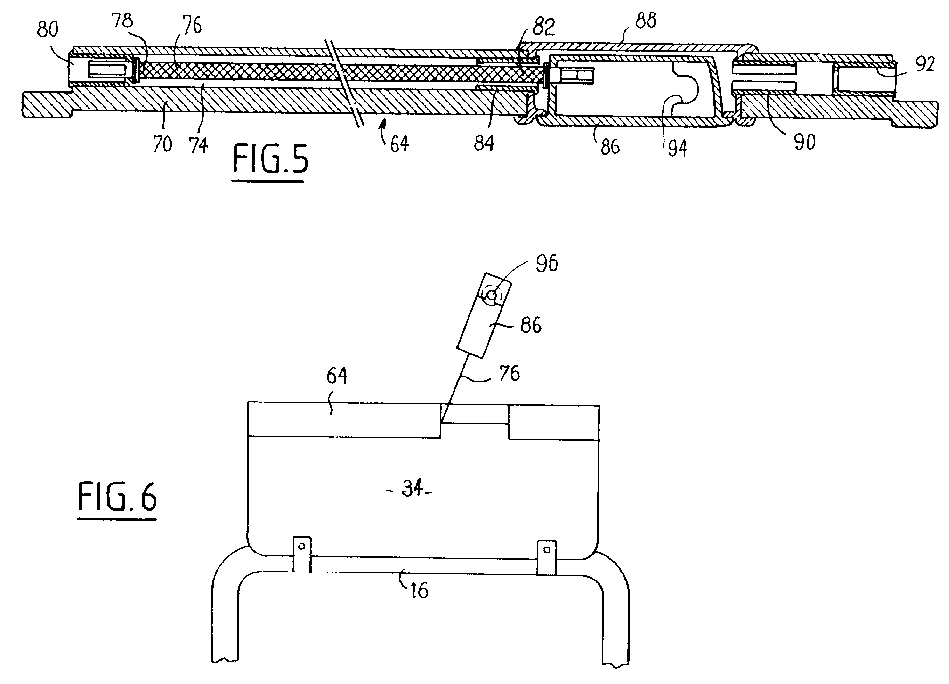

Dans la partie gauche de l'espace 74, en considérant la figure 5, il est prévu un cordon élastique 76 dont une première extrémité 78 est reliée au joint 64 au moyen d'un bouchon de fermeture et de fixation 80.

La seconde extrémité 82 du cordon élastique 76 traverse une douille de guidage 84 et est reliée à une poignée amovible 86 de manipulation de la cloison.

La poignée 86 est représentée à la figure 5 en position emboîtée dans une platine de réception et de maintien 88 fixée au corps tubulaire 70 du joint 64.

La platine 88 définit ainsi un évidement pour recevoir la poignée 86 lorsque la cloison est dans sa première position fermée.

La platine 88 est fixée au corps tubulaire 70 par deux manchons dont l'un 84 est traversé par la seconde extrémité 82 du cordon élastique, et dont l'autre 90 est reçu dans le corps tubulaire creux dont il épouse parfaitement le profil interne.

L'espace interne 74 est enfin délimité à droite par un second bouchon de fermeture 92.

La poignée 86 comporte sur sa face inférieure parallèle à la face inférieure 72 du joint 64 lorsqu'elle est en place dans la platine 88, une échancrure d'accrochage 94 en forme de demi-lune qui est prévue pour coopérer avec un bouton d'accrochage 96 de profil correspondant qui est fixé au hayon arrière 12.

Lorsque l'on retire la poignée 86 de son logement dans le joint 64, comme cela est représenté aux figures 4 et 6, en exerçant un effort de traction sur le cordon élastique 76, une portion de ce dernier fait saillie hors du corps tubulaire 70.

L'élasticité et la longueur du cordon sont déterminées pour que la partie de celui-ci située à l'extérieur ne puisse dépasser une longueur maximale prédéterminée en fonction de l'angle d'ouverture du hayon et de la position intermédiaire que l'on souhaite voir occupée par la cloison transparente 34 par rapport à la tablette 24.

Lorsque l'utilisateur désire que la cloison 34 occupe une position ouverte intermédiaire telle que celle représentée à la figure 2, il extrait la poignée 86 du logement 88 et exerce une traction sur le cordon 76 de manière à venir accrocher la poignée 86 sur le bouton 96.

Pour ramener la cloison 34 dans sa première position fermée représentée à la figure 1, il suffit à l'utilisateur de décrocher la poignée 86 et de la laisser revenir en position dans son logement 88 sous l'effet de rappel exercé par le cordon élastique 76.

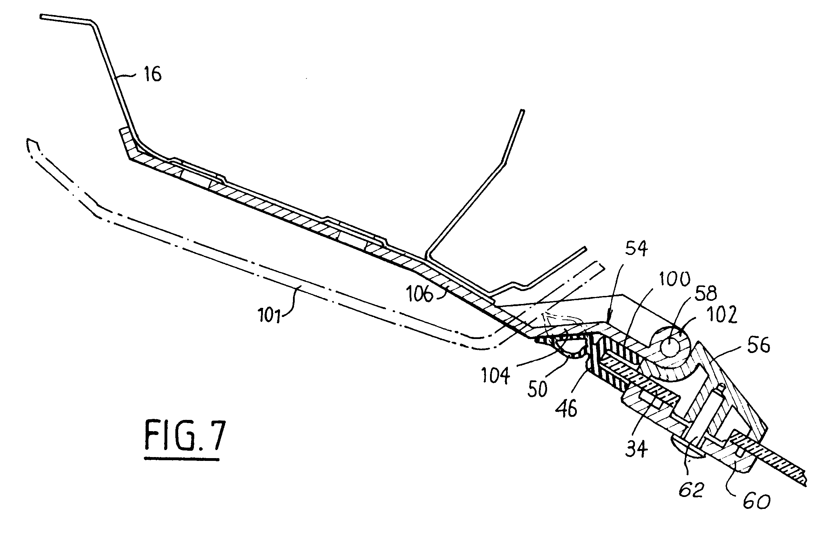

On décrira maintenant en se référant à la figure 7 un détail de conception des charnons fixes 54 qui équipent la cloison 34.

On a représenté à la figure 7 en traits pleins le profil de la traverse arrière 16 et en traits mixtes le profil du garnissage 101 en dehors des zones de fixation des charnons fixes 54. Ce garnisssage présente des échancrures au niveau des charnons fixes 54 pour permettre leur fixation sur la traverse 16.

Le charnon fixe 54 comprend une première partie plane 100 dont la première extrémité 102 reçoit l'axe de pivotement 58 qui la relie au charnon mobile 56.

La première partie 100 est parallèle à la cloison 34 lorsque cette dernière est dans sa première position fermée représentée à la figure 7.

La seconde extrémité de la première partie 100 du charnon fixe 54 se prolonge en direction de la traverse par une seconde partie plane 104 qui forme un angle obtus avec la première partie 100.

Comme on peut le constater à la figure 7, la lèvre d'étanchéité creuse 50 du joint 46 prend appui sur la seconde partie 104 du charnon fixe dans la zone de celui-ci et par son bord d'extrémité contre le garnissage 101, en dehors de la zone du charnon.

La seconde partie 104 du charnon fixe 54 se prolonge parallèlement à la première partie 100 par une troisième partie de charnon 106 qui est fixée à la traverse 16 par exemple au moyen de vis.

## Revendications

1. Dispositif de cloisonnement pour véhicule (10) muni d'un volet (12) s'articulant à l'arrière d'un pavillon (18) et situé au-dessus d'un compartiment à bagages (20), une tablette (24) s'étendant au-dessus de ce compartiment, du type comprenant une cloison transparente (34) disposée à l'intérieur du véhicule au voisinage du volet (12), caractérisé en ce que la cloison (34) est montée pivotante, autour d'un axe (X-X) agencé au voisinage de son bord supérieur (36) et parallèle à l'axe d'articulation du volet (12), entre une position fermée dans laquelle son bord inférieur (38, 64) est agencé à proximité d'une portion (40) de la tablette (24) et une position ouverte dans laquelle la cloison (34) est maintenue par des moyens d'accrochage temporaire (76, 94, 96) de la cloison (34) au volet (12).

2. Dispositif selon la revendication 1, caractérisé en ce que les moyens d'accrochage temporaire comportent un cordon (76) dont une première extrémité (78) est reliée à la cloison (34) et dont l'autre extrémité (82) est reliée à une poignée (86) comportant un dispositif d'accrochage (94) sur le volet (12, 96).

3. Dispositif selon la revendication 2, caractérisé en ce que la poignée (86) est une poignée amovible fixée à la cloison (34) lorsque cette dernière est dans la position fermée.

4. Dispositif selon la revendication 3, caractérisé en ce que le bord inférieur (38) de la cloison (34) est équipé d'un joint d'étanchéité (64) apte à reposer sur la tablette (24, 40) lorsque la cloison (34) est dans la position fermée qui comporte une portion creuse (70) de forme sensiblement tubulaire définissant un logement (88) dans lequel est reçue la poignée (86) et en ce que le cordon (76) est logé entièrement à l'intérieur (74) de la portion creuse (70) du joint (64) lorsque la poignée (86) est dans son logement.

5. Dispositif selon l'une quelconque des revendications 1 à 4, caractérisé en ce que le cordon est un cordon élastique (76).

6. Dispositif selon l'une quelconque des revendications 2 à 5, caractérisé en ce que le dispositif d'accrochage de la poignée (86) sur le volet (12) est du type comportant un bouton d'accrochage (96) et une échancrure (94) d'accrochage de la poignée sur le bouton (96).

7. Dispositif selon l'une quelconque des revendications précédentes, caractérisé en ce que le bord supérieur (34) de la cloison est équipé d'un joint d'étanchéité (46), et en ce que la cloison est montée pivotante au moyen d'au moins un charnon fixe (54) et un charnon mobile (56), des moyens d'étanchéité étant prévus pour assurer l'étanchéité du bord supérieur (36) dans la zone des charnons lorsque la cloison est dans ladite première position.

8. Dispositif selon la revendication 7, caractérisé en ce que le charnon fixe (54) comporte une première partie plane (100) dont une extrémité (102) reçoit l'axe de pivotement (58) et qui est sensiblement parallèle au plan de la cloison (34) lorsque cette dernière est dans la position fermée, et une deuxième partie plane (104) qui prolonge l'autre extrémité de la première partie (100) en formant un angle avec elle et qui est reliée à la caisse du véhicule, lesdits moyens d'étanchéité étant constitués par un joint (50) monté sur le bord supérieur (36) de la cloison (34) et qui prend appui sur ladite deuxième partie (104) du charnon fixe (54) en vis-à-vis lorsque la cloison est dans la position fermée.

9. Dispositif selon la revendication 8, caractérisé en ce que ladite deuxième partie (104) est reliée à la caisse (16) par une troisième partie plane (106) du charnon fixe sensiblement parallèle à ladite première partie (100).

## Patentansprüche

1. Abschirmungsvorrichtung für ein Fahrzeug (10) mit einer Klappe (12), die gelenkig am hinteren Teil eines Daches (18) angebracht ist und sich oberhalb eines Gepäckraumes (20) befindet, wobei sich eine Ablage (24) oberhalb des Gepäckraumes erstreckt, mit einem durchsichtigen Schirm (34), der im Inneren des Fahrzeugs in der Nähe der Klappe (12) angeordnet ist, dadurch **gekennzeichnet**, daß der Schirm (24) um eine in der Nähe seines oberen Randes (36) und parallel zur Schwenkachse der Klappe (12) angeordnete Achse (X-X) schwenkbar ist zwischen einer Schließstellung, in der sein unterer Rand (38,64) sich in der Nähe eines Teils (40) der Ablage (24) befindet, und einer Öffnungsstellung, in der der Schirm (34) durch Mittel (76,94,96) zum zeitweiligen Aufhängen des Schirms (34) an der Klappe (12) gehalten ist.

2. Vorrichtung nach Anspruch 1, dadurch **gekennzeichnet**, daß die Mittel zum zeitweiligen Aufhängen ein Seil (76) umfassen, dessen erstes Ende (78) mit dem Schirm (34) verbunden ist und dessen zweites Ende (82) mit einem Griff (86) verbunden ist, der eine Einrichtung (94) zum Aufhängen an der Klappe (12,96) aufweist.

3. Vorrichtung nach Anspruch 2, dadurch **gekennzeichnet**, daß der Griff (86) ein lösbarer Griff ist, der an dem Schirm (34) befestigt ist, wenn sich dieser in der Schließstellung befindet.

4. Vorrichtung nach Anspruch 3, dadurch **gekennzeichnet**, daß der untere Rand (38) des Schirmes (34) mit einer Dichtung (64) versehen ist, die dazu eingerichtet ist, sich auf der Ablage (24, 40) abzustützen, wenn sich der Schirm (34) in der Schließstellung befindet, und die einen im wesentlichen rohrförmigen hohlen Teil (70) aufweist, der einen Sitz (88) definiert, in welchem der Griff (86) untergebracht ist, und daß das Seil (76) vollständig im Inneren (74) des hohlen Teils (70) der Dichtung (64) untergebracht ist, wenn sich der Griff (86) in seinem Sitz befindet.

5. Vorrichtung nach einem der Ansprüche 1 bis 4, dadurch **gekennzeichnet**, daß das Seil ein elastisches Seil (76) ist.

6. Vorrichtung nach einem der Ansprüche 2 bis 5, dadurch **gekennzeichnet**, daß die Einrichtung zum Aufhängen des Griffes (86) an der Klappe (12) einen Aufhängungsknopf (96) und einen bogenförmigen Ausschnitt (94) zum Aufhängen des Griffes auf dem Knopf (96) aufweist.

7. Vorrichtung nach einem der vorstehenden Ansprüche, dadurch **gekennzeichnet**, daß der obere Rand (34) des Schirmes mit einer Dichtung (46) versehen ist, und daß der Schirm gelenkig montiert ist mit Hilfe eines festen Scharnierteils (54) und eines beweglichen Scharnierteils (56), wobei Dichtmittel vorgesehen sind, um die Dichtheit des oberen Randes (36) im Bereich der Scharnierteile sicherzustellen, wenn sich der Schirm in der ersten Stellung befindet.

8. Vorrichtung nach Anspruch 7, dadurch **gekennzeichnet**, daß das feste Scharnierteil (54) einen ebenen ersten Abschnitt (100), dessen eines Ende (102) die Scharnierachse (58) aufnimmt und der im wesentlichen parallel zur Ebene des Schirmes (34) ist, wenn sich letzterer in der Schließstellung befindet, und einen zweiten ebenen Abschnitt (104) aufweist, der das andere Ende des ersten Abschnitts (100) verlängert und mit diesem einen Winkel bildet und der mit der Karosserie des Fahrzeugs verbunden ist, wobei die Dichtmittel gebildet werden durch eine auf dem oberen Rand (36) des Schirmes (34) montierte Dichtung (50), die sich an den zweiten Abschnitt (104) des gegenüberliegenden festen Scharnierteils (54) anlegt, wenn sich der Schirm in der Schließstellung befindet.

9. Vorrichtung nach Anspruch 8, dadurch **gekennzeichnet**, daß der zweite Abschnitt (104) mit der Karosserie (16) über einen dritten ebenen Abschnitt (106) des festen Scharnierteils verbunden ist, der im wesentlichen zu dem ersten Abschnitt (100) parallel ist.

## Claims

1. Partitioning device for vehicle (10) fitted with a flap (12) articulating at the rear of a roof (18) and situated above a luggage compartment (20), a shelf (24) extending above this compartment, of a type comprising a transparent partition (34) positioned inside the vehicle near the flap (12), characterized in that the partition (34) is pivotally mounted, around an axis (X-X) located near its upper edge (36) and parallel to the articulation axis of the flap (12), between a closed position in which its lower edge (38, 64) is located near a part (40) of the shelf (24) and an open position in which the partition (34) is maintained by means of temporary hooking (76, 94, 96) of the partition (34) to the flap (12).

2. Device according to claim 1, characterized in that the temporary hooking means comprise a cord (76) a first end (78) of which is connected to the partition (34) and the other end (82) of which is connected to a latch (86) containing a hooking device (94) on the flap (12, 96).

3. Device according to claim 2, characterized in that the latch (86) is a removable latch fixed to the partition (34) when this latter is in the closed position.

4. Device according to claim 3, characterized in that the lower edge (38) of the partition (34) is fitted with a weatherstrip (64) suitable for resting on the shelf (24, 40) when the partition (34) is in the closed position and which comprises a hollow portion (70) of approximately tubular shape defining a housing (88) in which the latch (86) is received and in that the cord (76) is housed entirely inside (74) the hollow portion (70) of the weatherstrip (64) when the latch (86) is in its housing.

5. Device according to any one of claims 1 to 4, characterized in that the cord is an elastic cord (76).

6. Device according to any one of claims 2 to 5, characterized in that the hooking device of the latch (86) on the flap (12) is of a type comprising a hooking peg (96) and a notch (94) for hooking the latch on the peg (96).

7. Device according to any one of the previous claims, characterized in that the upper edge (34) of the partition is fitted with a seal (46), and in that the partition is pivotally mounted by means of at least one fixed hinge leaf (54) and one mobile hinge leaf (56), the sealing means being provided to ensure the imperviousness of the upper edge (36) in the area of the hinge leaves when the partition is in the said first position.

8. Device according to claim 7, characterized in that the fixed hinge leaf (54) comprises a first flat part (100) one end of which (102) receives the pivot pin (58) and which is approxi-mately parallel to the flat surface of the partition (34) when this latter is in the closed position, and a second flat part (104) which extends the other end of the first part (100) by forming an angle with it and which is connected to the body of the vehicle, the said sealing means being constituted by a seal (50) mounted on the upper edge (36) of the partition (34) and which presses on the said second part (104) of the fixed hinge leaf (54) which is opposite it when the partition is in the closed position.

9. Device according to claim 8, characterized in that the said second part (104) is connected to the body (16) by a third flat part (106) of the fixed hinge leaf approximately parallel to the said first part (100).

FIG.1

FIG.2

FIG.3

EP 0 380 891 B1

FIG.4

EP 0 380 891 B1

78 76
80
82 88
92

70 74 FIG.5 64 84 86 94 90

96
86
64 76
- 34 -
FIG.6
16

EP 0 380 891 B1

**FIG.7**